(19) Europäisches Patentamt
European Patent Office
Office européen des brevets

(11) **EP 4 056 384 B1**

(12) **EUROPEAN PATENT SPECIFICATION**

(45) Date of publication and mention
of the grant of the patent:
**03.07.2024 Bulletin 2024/27**

(21) Application number: **22157944.4**

(22) Date of filing: **22.02.2022**

(51) International Patent Classification (IPC):
**B60C 11/00** (2006.01)    **B60C 1/00** (2006.01)
**B60C 11/03** (2006.01)

(52) Cooperative Patent Classification (CPC):
**B60C 11/033; B60C 1/0016; B60C 11/005;**
B60C 2011/0025

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2021 JP 2021040197**

(43) Date of publication of application:
**14.09.2022 Bulletin 2022/37**

(73) Proprietor: **Sumitomo Rubber Industries, Ltd.
Kobe-shi, Hyogo-ken 651-0072 (JP)**

(72) Inventor: **YAMAMOTO, Keisuke
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-B1- 2 676 808        WO-A1-2020/179582
JP-A- 2020 121 606**

**Description**

TECHNICAL FIELD

The present invention relates to a tire.

BACKGROUND ART

Tire treads require properties such as grip performance (e.g., cornering performance) and abrasion resistance from the safety and environmental standpoints. These properties have been improved, for example, by modifying the materials used in the treads such as rubber components and fillers.

EP 2 676 808 B1 discloses a pneumatic tire comprising a cap layer and a base layer. A loss tangent of the cap layer is disclosed to be in the range of 0.10 to 0.30 and a loss tangent of the base tread is disclosed to be 0.03 to 0.18.

Further pneumatic tires of the prior art are disclosed in JP 2020 121606 A and in WO 2020/179582 A1.

SUMMARY OF INVENTION

TECHNICAL PROBLEM

The present invention aims to solve the above problem and provide a tire excellent in overall performance in terms of cornering performance during the initial stage of running and during the middle and later stages of running.

SOLUTION TO PROBLEM

The present invention relates to a tire, including a tread including a cap tread and a base tread, the tread having a land ratio of 70% or higher, the cap tread having an average loss tangent over 30-100°C of 0.10 or more, the base tread having an average loss tangent over 30-100°C of less than 0.05.

ADVANTAGEOUS EFFECTS OF INVENTION

The tire according to the present invention includes a tread including a cap tread and a base tread. The tread has a land ratio of 70% or higher, the cap tread has an average loss tangent over 30-100°C of 0.10 or more, and the base tread has an average loss tangent over 30-100°C of less than 0.05. Thus, the present invention provides a tire excellent in overall performance in terms of cornering performance during the initial stage of running and during the middle and later stages of running.

BRIEF DESCRIPTION OF DRAWINGS

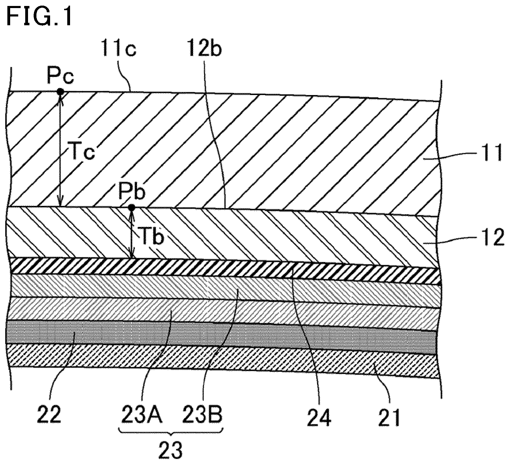

Fig. 1 is an enlarged cross-sectional view showing a tread portion of a tire.

DESCRIPTION OF EMBODIMENTS

The present invention provides a tire including a tread including a cap tread and a base tread. The tread has a land ratio of 70% or higher, the cap tread has an average loss tangent over 30-100°C of 0.10 or more, and the base tread has an average loss tangent over 30-100°C of less than 0.05. Such a tire is excellent in overall performance in terms of cornering performance during the initial stage of running and during the middle and later stages of running.

The reason for such an advantageous effect (mechanism) is not clear but is believed to be as follows.

Tires having a high land ratio show high grip performance during cornering in the middle and later stages of running in which the tread face has been sufficiently warmed because then they have a large ground contact area during cornering and can exhibit increased adhesion to the road surface. On the other hand, during the initial stage of running in which the tread face has not been sufficiently warmed, the tires with a high land ratio, i.e., fewer grooves, have fewer edges to catch on the road surface and show lower cornering performance. To overcome this problem, it is considered that the average loss tangent of the cap tread over a temperature range corresponding to the tire temperature during the initial to middle stages of running may be increased to 0.10 or more to enhance the initial to middle stage cornering performance in spite of the high land ratio, and further that since a rapid increase in temperature can cause a temperature increase and softening of the base tread, resulting in a destabilization thereof, the loss tangent of the base tread may be adjusted to less than 0.05 to prevent this problem. Such a mechanism is believed to improve overall performance in terms of cornering performance during the initial stage of running and cornering performance during the middle and later stages of running.

Accordingly, the tire of the present invention solves the problem (purpose) of improving overall performance in terms of cornering performance during the initial stage of running and cornering performance during the middle and later stages of running by formulating a tire including a tread including a cap tread and a base tread in which the tread has a land ratio of 70% or higher, the cap tread has an average loss tangent over 30-100°C of 0.10 or more, and the base tread has an average loss tangent over 30-100°C of less than 0.05. In other words, the parameters: "the tread having a land ratio of 70% or higher", "the cap tread having an average loss tangent over 30-100°C of 0.10 or more", and "the base tread having an average loss tangent over 30-100°C of less than 0.05" do not define the problem (purpose), and the problem herein is to improve overall performance in terms of cornering performance during the initial stage of running and cornering performance during the middle and later stages of running. In order to provide a solution to this problem, the tire has been formulated to satisfy these parameters.

In the tire, the tread has a land ratio (LR) of 70% or higher, preferably 74% or higher, more preferably 76% or higher, still more preferably 78% or higher, particularly preferably 80% or higher. The upper limit of the LR is preferably 90% or lower, more preferably 88% or lower, still more preferably 86% or lower, particularly preferably 85% or lower. When the LR is within the range indicated above, the advantageous effect tends to be better achieved.

Herein, when the tire is a pneumatic tire, the land ratio (LR) is calculated from the contact patch of the tire under conditions including a normal rim, a normal internal pressure, and a normal load. In the case of a non-pneumatic tire, the land ratio can be similarly determined without the need of the normal internal pressure.

The term "normal rim" refers to a rim specified for each tire by the standards in a standard system including standards according to which tires are provided, and for example refers to "standard rim" in JATMA, "design rim" in TRA, or "measuring rim" in ETRTO.

The term "normal internal pressure" refers to an air pressure specified for each tire by the standards, and for example refers to "maximum air pressure" in JATMA, a maximum value shown in Table "TIRE LOAD LIMITS AT VARIOUS COLD INFLATION PRESSURES" in TRA, or "inflation pressure" in ETRTO. In the case of passenger vehicle tires, the normal internal pressure is 180 kPa.

The term "normal load" refers to a load specified for each tire by the standards, and for example refers to a load obtained by multiplying "maximum load capacity" in JATMA, a maximum value shown in Table "TIRE LOAD LIMITS AT VARIOUS COLD INFLATION PRESSURES" in TRA, or "load capacity" in ETRTO by 0.88.

The contact patch may be determined by mounting the tire on a normal rim, applying a normal internal pressure to the tire, and allowing the tire to stand at 25°C for 24 hours, followed by applying black ink to the tread face of the tire and pressing it against a cardboard at a normal load (camber angle: 0°) for transfer to the cardboard.

The transfer may be performed in five positions rotated by 72 degrees relative to one another in the tire circumferential direction. Namely, the contact patch may be determined five times.

The average of the largest lengths in the tire axial direction of the five contact patches is denoted as L, and the average of the lengths in the direction orthogonal to the axis direction thereof is denoted as W.

The land ratio (LR) is calculated by the equation:

[Average of areas of five contact patches transferred to cardboard (parts with black ink)]/(L $\times$ W) $\times$ 100 (%).

Here, the average length and the average area are each a simple average of the five values.

The tread in the tire may include a groove that is continuous in the tire circumferential direction and/or a groove that is non-continuous in the tire circumferential direction. Examples of patterns with such grooves include rib, lug, rib-lug, and block patterns.

From the standpoint of overall performance in terms of cornering performance during the initial stage of running and during the middle and later stages of running, the average loss tangent over 30-100°C of the cap tread (tan $\delta$ c) is 0.10 or more, preferably 0.16 or more, more preferably 0.19 or more, still more preferably 0.20 or more, particularly preferably 0.21 or more. The lower limit of the tan $\delta$ c may be 0.22 or more or 0.24 or more. The upper limit of the tan $\delta$ c is not limited, but is preferably 0.50 or less, more preferably 0.40 or less, still more preferably 0.35 or less, particularly preferably 0.30 or less.

From the standpoint of overall performance in terms of cornering performance during the initial stage of running and during the middle and later stages of running, the average loss tangent over 30-100°C of the base tread (tan $\delta$ b) is less than 0.05, preferably 0.04 or less, more preferably less than 0.04, still more preferably 0.03 or less, particularly preferably less than 0.03, most preferably 0.02 or less. The lower limit of the tan $\delta$ b is not limited, but is preferably 0.001 or more, more preferably 0.005 or more, still more preferably 0.01 or more.

From the standpoint of overall performance in terms of cornering performance during the initial stage of running and during the middle and later stages of running, the tire preferably satisfies the following relationship:

$$\tan \delta\, c / \tan \delta\, b \geq 1.1$$

wherein tan $\delta$ c represents the average loss tangent over 30-100°C of the cap tread, and tan $\delta$ b represents the average loss tangent over 30-100°C of the base tread.

The value of tan $\delta$ c/tan $\delta$ b is preferably 1.3 or more, more preferably 2.5 or more, still more preferably 3.0 or more, further preferably 3.5 or more, particularly preferably 4.0 or more. The lower limit of the value of tan $\delta$ c/tan $\delta$ b may be 4.8 or more, 5.0 or more, or 5.3 or more. The upper limit is preferably 10.0 or less, more preferably 8.0 or less, still more preferably 7.0 or less, particularly preferably 6.0 or less.

From the standpoint of overall performance in terms of cornering performance during the initial stage of running and during the middle and later stages of running, the tire preferably satisfies the following relationship:

$$\tan \delta\, c / LR \times 100 \geq 0.12$$

wherein tan $\delta$ c represents the average loss tangent over 30-100°C of the cap tread, and LR represents the land ratio (%).

The value of tan $\delta$ c/LR × 100 (= (tan $\delta$ c/LR) × 100) is preferably 0.15 or more, more preferably 0.19 or more, still more preferably 0.20 or more, further preferably 0.24 or more, particularly preferably 0.25 or more. The lower limit of the value of tan $\delta$ c/LR × 100 may be 0.26 or more, 0.28 or more, or 0.30 or more. The upper limit is preferably 0.80 or less, more preferably 0.60 or less, still more preferably 0.50 or less, particularly preferably 0.40 or less.

Here, the loss tangent (tan $\delta$) over 30 to 100°C can be controlled by the types and amounts of the chemicals (in particular, rubber components, fillers, softeners, resins, sulfur, vulcanization accelerators, and silane coupling agents) incorporated into the rubber composition. For example, the tan $\delta$ tends to increase when softeners (e.g., resins) poorly compatible with rubber components are used, when the amount of plasticizers (e.g., solid resins) highly compatible with rubber components is increased, when unmodified rubbers are used, when the amount of styrene-butadiene rubbers is increased, when the amount of fillers is increased, when the amount of oils as plasticizers is increased, when the amount of sulfur is reduced, when the amount of vulcanization accelerators is reduced, or when the amount of silane coupling agents is reduced. On the other hand, the tan $\delta$ tends to decrease when plasticizers (e.g., solid resins) highly compatible with rubber components are used, when modified rubbers are used, when the amount of natural rubbers is increased, when the amount of styrene-butadiene rubbers is reduced, when the amount of fillers is reduced, when the amount of oils as plasticizers is reduced, when the amount of sulfur is increased, when the amount of vulcanization accelerators is increased, or when the amount of silane coupling agents is increased. Thus, these methods may be used alone or in appropriate combination to adjust the average loss tangent over 30-100°C of the cap tread (tan $\delta$ c) to 0.10 or more or adjust the average loss tangent over 30-100°C of the base tread (tan $\delta$ b) to less than 0.05.

The loss tangent (tan $\delta$) values of the cap and base treads can each be determined from the tan $\delta$-temperature curve obtained by viscoelastic testing over a temperature range of 30 to 100°C performed on samples of the cap tread (vulcanized rubber composition) or base tread (vulcanized rubber composition) collected from the tire. Specifically, it can be determined as described later in EXAMPLES.

From the standpoint of overall performance in terms of cornering performance during the initial stage of running and during the middle and later stages of running, the tire preferably satisfies the following relationship:

$$Tc > Tb$$

wherein Tc represents the average thickness (mm) of the cap tread, and Tb represents the average thickness (mm) of the base tread.

The value of Tc/Tb is preferably 9.0 or less, more preferably 6.0 or less, still more preferably 5.0 or less, particularly preferably 4.0 or less, most preferably 3.0 or less. The lower limit of the value of Tc/Tb is preferably 1.0 or more, more preferably 2.0 or more, still more preferably 2.5 or more. When the value of Tc/Tb is within the range indicated above, the advantageous effect tends to be better achieved.

The Tc (average thickness (mm) of the cap tread) is preferably 3.0 mm or more, more preferably 3.5 mm or more, still more preferably 4.0 mm or more, while the Tc is preferably 7.0 mm or less, more preferably 6.5 mm or less, still more preferably 6.4 mm or less. When the Tc is within the range indicated above, the advantageous effect tends to be better achieved.

The average thicknesses of the cap and base treads (Tc (mm), Tb (mm)) are the average of the thicknesses measured at points on the cap tread face and the average of the thicknesses measured at points on the base tread face, respectively. Fig. 1 is an enlarged cross-sectional view showing a tread portion of a tire and shows an example of a two-layer tread including a cap tread 11 and a base tread 12. In Fig. 1, the symbol Pc represents a point on a cap tread face 11c and the symbol Pb represents a point on a base tread face 12b. A double-headed arrow Tc represents the thickness of the cap tread 11 measured at the point Pc and a double-headed arrow Tb represents the thickness of the base tread 12 measured at the point Pb. The thickness Tc is measured along the normal of the cap tread face 11c at the point Pc, and the thickness Tb is measured along the normal of the base tread face 12b at the point Pb.

(Chemicals)

Next, a description is given on chemicals that may be used in a cap tread rubber composition forming the cap tread and in a base tread rubber composition forming the base tread.

Examples of rubber components that may be used in the cap tread or base tread rubber composition include isoprene-based rubbers such as polyisoprene rubbers (IR), epoxidized polyisoprene rubbers, hydrogenated polyisoprene rubbers, grafted polyisoprene rubbers, natural rubbers (NR), deproteinized natural rubbers (DPNR), highly purified natural rubbers (UPNR), epoxidized natural rubbers (ENR), hydrogenated natural rubbers (HNR), and grafted natural rubbers; polybutadiene rubbers (BR), styrene-butadiene rubbers (SBR), styrene-isoprene-butadiene rubbers (SIBR), ethylene-propylene-diene rubbers (EPDM), chloroprene rubbers (CR), acrylonitrile butadiene rubbers (NBR), and butyl-based rubbers.

These rubbers may be either unmodified or modified rubbers. Examples of the modified rubbers include rubbers having functional groups interactive with fillers. Examples of the functional groups include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino (preferably amino whose hydrogen atom is replaced with a C1-C6 alkyl group), alkoxy (preferably C1-C6 alkoxy), alkoxysilyl (preferably C1-C6 alkoxysilyl), and amide groups. These rubber components may be used alone or in combinations of two or more.

The cap tread or base tread rubber composition desirably contains a filler.

Any filler may be used in the cap tread or base tread rubber composition, including materials known in the rubber field. Examples include inorganic fillers such as silica, carbon black, calcium carbonate, talc, alumina, clay, aluminum hydroxide, aluminum oxide, and mica; and poorly dispersible fillers. Carbon black or silica is preferred among these.

Examples of carbon black that may be used in the cap tread or base tread rubber composition include N134, N110, N220, N234, N219, N339, N330, N326, N351, N550, and N762. These may be used alone or in combinations of two or more. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc.

Examples of silica that may be used in the cap tread or base tread rubber composition include dry silica (anhydrous silica) and wet silica (hydrous silica). Wet silica is preferred among these because it has a large number of silanol groups.

When the cap tread or base tread rubber composition contains silica, it preferably contains a silane coupling agent together with the silica.

Any silane coupling agent conventionally used with silica in the rubber industry may be used in the cap tread or base tread rubber composition. Examples include, but are not limited to: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more. Preferred among these are sulfide or mercapto silane coupling agents.

The cap tread or base tread rubber composition may contain a plasticizer. Herein, the term "plasticizer" refers to a material which can impart plasticity to rubber components. Examples of the plasticizer include, but are not limited to, liquid plasticizers which have plasticity and are liquid at 25°C, such as oils and liquid resins, and solid plasticizers which have plasticity and are solid at 25°C, such as resins (polymers that are solid at 25°C (solid resins)). These plasticizers may be used alone or in combinations of two or more.

Non-limiting examples of the oils include conventional oils, including, for example: process oils such as paraffinic process oils, aromatic process oils, and naphthenic process oils; low PCA (polycyclic aromatic) process oils such as TDAE and MES; vegetable oils; and mixtures thereof. From the standpoints of abrasion resistance and fracture properties, aromatic process oils are preferred among these. Specific examples of the aromatic process oils include Diana Process Oil AH series available from Idemitsu Kosan Co., Ltd.

Any liquid resin may be used, and examples include liquid aromatic vinyl polymers, coumarone-indene resins, indene resins, terpene resins, rosin resins, and hydrogenated products of the foregoing.

Examples of the liquid aromatic vinyl polymers include resins produced by polymerization of α-methylstyrene and/or styrene. Specific examples include liquid resins such as styrene homopolymers, α-methylstyrene homopolymers, and copolymers of α-methylstyrene and styrene.

Examples of the liquid coumarone-indene resins include resins that contain coumarone and indene as the main monomer components forming the backbone (main chain) of the resins. Examples of monomer components which may be contained in the backbone in addition to coumarone and indene include styrene, α-methylstyrene, methylindene, and vinyltoluene.

Examples of the liquid indene resins include liquid resins that contain indene as the main monomer component forming the backbone (main chain) of the resins.

Examples of the liquid terpene resins include liquid terpene-based resins typified by resins produced by polymerization of terpene compounds such as α-pinene, β-pinene, camphene, or dipentene, and terpenephenol resins produced from terpene compounds and phenolic compounds as raw materials.

Examples of the liquid rosin resins include liquid rosin-based resins typified by natural rosins, polymerized rosins, modified rosins, and esterified or hydrogenated products of the foregoing.

Any resin (solid resin which is solid at 25°C) may be used, and examples include solid styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These may be used alone or in combinations of two or more.

The term "solid styrene resins" refers to solid polymers produced from styrenic monomers as structural monomers, and examples include polymers produced by polymerization of styrenic monomers as main components (at least 50% by mass). Specific examples include homopolymers produced by polymerization of single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers produced by copolymerization of two or more styrenic monomers, and copolymers of styrenic monomers and additional monomers copolymerizable therewith. Examples of the additional monomers include: acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

Examples of the solid coumarone-indene resins include solid resins having structural units as described for the liquid coumarone-indene resins.

Examples of the solid terpene resins include polyterpene, terpenephenol, and aromatic modified terpene resins. Examples of the solid polyterpene resins include solid terpene resins made from terpene compounds, such as α-pinene resins, β-pinene resins, limonene resins, dipentene resins, and β-pinene-limonene resins, and solid hydrogenated terpene resins produced by hydrogenation of these terpene resins. Examples of the solid terpenephenol resins include solid resins produced by copolymerization of terpene compounds and phenolic compounds, and solid resins produced by hydrogenation of these resins. Specific examples include solid resins produced by condensation of terpene compounds, phenolic compounds, and formaldehyde. Examples of the solid aromatic modified terpene resins include solid resins produced by modification of terpene resins with aromatic compounds, and solid resins produced by hydrogenation of these resins.

Examples of the solid p-t-butylphenol acetylene resins include solid resins produced by condensation of p-t-butylphenol and acetylene.

Non-limiting examples of the solid acrylic resins include solvent-free solid acrylic resins. Examples of the monomer components of the solid acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives. In addition to the (meth)acrylic acids or (meth)acrylic acid derivatives, aromatic vinyls, such as styrene, α-methylstyrene, vinyltoluene, vinylnaphthalene, divinylbenzene, trivinylbenzene, or divinylnaphthalene, may also be used as the monomer components of the solid acrylic resins. The solid acrylic resins may be formed only of (meth)acrylic components or may further contain constituent components other than the (meth)acrylic components. Moreover, the solid acrylic resins may contain a hydroxy, carboxyl, or silanol group, or other groups.

The cap tread or base tread rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The cap tread or base tread rubber composition preferably contains a vulcanization accelerator.

Examples of the vulcanization accelerator include thiazole vulcanization accelerators such as 2-mercaprobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; guanidine vulcanization accelerators such as diphenylguanidine, diorthotolylguanidine, and orthotolylbiguanidine; and zinc dibenzyldithiocarbamate. Sulfenamide or guanidine vulcanization accelerators are preferred among these.

The cap tread or base tread rubber composition may contain a wax, antioxidant, stearic acid, zinc oxide, vulcanizing agent other than sulfur (e.g., organic crosslinking agent), or other components.

(Cap tread (cap tread rubber composition))

From the standpoint of overall performance in terms of cornering performance during the initial stage of running and during the middle and later stages of running, the rubber component(s) in the cap tread rubber composition preferably include the above-described SBR.

From the standpoint of overall performance in terms of cornering performance during the initial stage of running and during the middle and later stages of running, the SBR content based on 100% by mass of the rubber components in the cap tread rubber composition is preferably 50% by mass or more. The lower limit is more preferably 70% by mass or more, still more preferably 80% by mass or more, particularly preferably 90% by mass or more, and may be 100% by mass.

Any SBR may be used. Examples include emulsion-polymerized styrene-butadiene rubbers (E-SBR) and solution-polymerized styrene-butadiene rubbers (S-SBR). Usable commercial products are available from Sumitomo Chemical Co., Ltd., JSR Corporation, Asahi Kasei Corporation, Zeon Corporation, etc.

The styrene content of the SBR is preferably 20% by mass or higher, more preferably 30% by mass or higher, still more preferably 40% by mass or higher, but is preferably 60% by mass or lower, more preferably 50% by mass or lower. When the styrene content is within the range indicated above, the advantageous effect tends to be better achieved.

The styrene content of the SBR can be measured by $^1$H-NMR.

The vinyl content of the SBR is preferably 25% by mass or higher, more preferably 35% by mass or higher, still more preferably 39% by mass or higher, but is preferably 60% by mass or lower, more preferably 50% by mass or lower. When the vinyl content is within the range indicated above, the advantageous effect tends to be better achieved.

The vinyl content (1,2-butadiene unit content) of the SBR can be measured by infrared absorption spectrometry.

From the standpoint of overall performance in terms of cornering performance during the initial stage of running and during the middle and later stages of running, the cap tread rubber composition preferably contains, as a filler, the above-described carbon black or silica, more preferably the carbon black.

The filler content per 100 parts by mass of the rubber components in the cap tread rubber composition is preferably 50 parts by mass or more, more preferably 80 parts by mass or more, still more preferably 110 parts by mass or more, particularly preferably 120 parts by mass or more. The upper limit is preferably 200 parts by mass or less, more preferably 170 parts by mass or less, still more preferably 150 parts by mass or less, particularly preferably 130 parts by mass or less. When the filler content is within the range indicated above, the advantageous effect tends to be better achieved.

The carbon black content per 100 parts by mass of the rubber components in the cap tread rubber composition is preferably 30 parts by mass or more, more preferably 60 parts by mass or more, still more preferably 80 parts by mass or more, particularly preferably 90 parts by mass or more. The lower limit of the carbon black content may be 110 parts by mass or more or 120 parts by mass or more. The upper limit is preferably 200 parts by mass or less, more preferably 150 parts by mass or less, still more preferably 130 parts by mass or less, particularly preferably 125 parts by mass or less. When the carbon black content is within the range indicated above, the advantageous effect tends to be better achieved.

The nitrogen adsorption specific surface area ($N_2SA$) of the carbon black is preferably 30 $m^2/g$ or more, more preferably 50 $m^2/g$ or more, still more preferably 65 $m^2/g$ or more, particularly preferably 75 $m^2/g$ or more. The $N_2SA$ is preferably 120 $m^2/g$ or less, more preferably 100 $m^2/g$ or less, still more preferably 90 $m^2/g$ or less. When the $N_2SA$ is within the range indicated above, the advantageous effect tends to be better achieved.

The nitrogen adsorption specific surface area of the carbon black herein is determined in accordance with JIS K6217-2:2001.

The silica content per 100 parts by mass of the rubber components in the cap tread rubber composition is preferably 50 parts by mass or more, more preferably 60 parts by mass or more, still more preferably 80 parts by mass or more, particularly preferably 85 parts by mass or more, most preferably 90 parts by mass or more. The silica content is preferably 150 parts by mass or less, more preferably 120 parts by mass or less, still more preferably 100 parts by mass or less, particularly preferably 95 parts by mass or less. When the silica content is within the range indicated above, the advantageous effect tends to be better achieved.

The nitrogen adsorption specific surface area ($N_2SA$) of the silica is preferably 120 $m^2/g$ or more, more preferably 150 $m^2/g$ or more, still more preferably 160 $m^2/g$ or more. The $N_2SA$ is preferably less than 200 $m^2/g$, more preferably 195 $m^2/g$ or less, still more preferably 185 $m^2/g$ or less. Moreover, the lower or upper limit of the $N_2SA$ of the silica may be 175 $m^2/g$.

The $N_2SA$ of the silica herein is measured by a BET method in accordance with ASTM D3037-81.

The silane coupling agent content per 100 parts by mass of the silica in the cap tread rubber composition is preferably 1 to 15 parts by mass, more preferably 3 to 10 parts by mass.

From the standpoint of overall performance in terms of cornering performance during the initial stage of running and during the middle and later stages of running, the cap tread rubber composition preferably contains any of the above-described solid plasticizers which have plasticity and are liquid at 25°C, more preferably any of the above-described solid resins such as solid coumarone-indene resins.

The solid plasticizer content per 100 parts by mass of the rubber components in the cap tread rubber composition is preferably 10 parts by mass or more, more preferably 20 parts by mass or more, still more preferably 30 parts by mass or more, particularly preferably 38 parts by mass or more. The lower limit of the solid plasticizer content may be 40 parts by mass or more or 45 parts by mass or more. The solid plasticizer content is preferably 80 parts by mass or less, more preferably 60 parts by mass or less, still more preferably 50 parts by mass or less, particularly preferably 45 parts by mass or less. When the solid plasticizer content is within the range indicated above, the advantageous effect tends to be better achieved. Here, the solid resin (e.g., solid C5/C9 petroleum resin) content is also desirably within the range as indicated above.

The solid resin used in the cap tread rubber composition preferably has a softening point of 160°C or lower, more preferably 130°C or lower, still more preferably 110°C or lower, particularly preferably 96°C or lower. The lower limit of the softening point is preferably 60°C or higher, more preferably 80°C or higher, still more preferably 90°C or higher, particularly preferably 94°C or higher. When the softening point is within the range indicated above, the advantageous effect tends to be better achieved.

Herein, the softening point of the solid resin is determined in accordance with JIS K 6220-1:2001 using a ring and ball softening point measuring apparatus and defined as the temperature at which the ball drops down.

From the standpoint of overall performance in terms of cornering performance during the initial stage of running and during the middle and later stages of running, the cap tread rubber composition preferably contains any of the above-described liquid plasticizers which have plasticity and are liquid at 25°C, more preferably any of the above-described oils.

The oil used in the cap tread rubber composition is preferably a paraffinic process oil or an aromatic process oil.

The liquid plasticizer content per 100 parts by mass of the rubber components in the cap tread rubber composition is preferably 5 parts by mass or more, more preferably 10 parts by mass or more, still more preferably 15 parts by mass or more, particularly preferably 20 parts by mass or more. The upper limit is preferably 50 parts by mass or less, more preferably 35 parts by mass or less, still more preferably 25 parts by mass or less. When the liquid plasticizer content is within the range indicated above, the advantageous effect tends to be better achieved. Here, the oil content is also desirably within the range as indicated above.

The cap tread rubber composition preferably contains sulfur.

The sulfur content per 100 parts by mass of the rubber components in the cap tread rubber composition is preferably 0.5 parts by mass or more, more preferably 1.0 parts by mass or more, still more preferably 1.3 parts by mass or more, particularly preferably 1.5 parts by mass or more. The sulfur content is also preferably 7.0 parts by mass or less, more preferably 5.0 parts by mass or less, still more preferably 3.0 parts by mass or less. When the sulfur content is within the range indicated above, the advantageous effect tends to be better achieved.

The cap tread rubber composition preferably contains a vulcanization accelerator.

The vulcanization accelerator content per 100 parts by mass of the rubber components in the cap tread rubber composition is preferably 1.0 parts by mass or more, more preferably 2.0 parts by mass or more, still more preferably 2.5 parts by mass or more, particularly preferably 3.0 parts by mass or more. The vulcanization accelerator content is also preferably 8.0 parts by mass or less, more preferably 6.0 parts by mass or less, still more preferably 4.0 parts by mass or less. When the vulcanization accelerator content is within the range indicated above, the advantageous effect tends to be better achieved.

(Base tread (base tread rubber composition))

From the standpoint of overall performance in terms of cornering performance during the initial stage of running and during the middle and later stages of running, the rubber component(s) of the base tread rubber composition preferably include any of the above-described isoprene-based rubbers or BR, more preferably any combination of the isoprene-based rubbers and BR.

The isoprene-based rubber content based on 100% by mass of the rubber components in the base tread rubber composition is preferably 20% by mass or more, more preferably 30% by mass or more, still more preferably 60% by mass or more, particularly preferably 65% by mass or more, most preferably 70% by mass or more. The upper limit is preferably 95% by mass or less, more preferably 80% by mass or less, still more preferably 75% by mass or less. When the isoprene-based rubber content is within the range indicated above, the advantageous effect tends to be better achieved.

The BR used is preferably, for example, a high-cis polybutadiene rubber. Commercial products of the high-cis polybutadiene rubber include BR1220 available from Zeon Corporation and BR130B and BR150B both available from Ube Industries, Ltd. Herein, the cis content is determined by infrared absorption spectrometry.

The cis content of the BR is preferably 70% by mass or higher, more preferably 90% by mass or higher, still more preferably 97% by mass or higher.

The BR content based on 100% by mass of the rubber components in the base tread rubber composition is preferably 5% by mass or more, more preferably 15% by mass or more, still more preferably 20% by mass or more, particularly preferably 25% by mass or more. The upper limit is preferably 50% by mass or less, more preferably 45% by mass or less, still more preferably 35% by mass or less, particularly preferably 30% by mass or less. When the BR content is within the range indicated above, the advantageous effect tends to be better achieved.

From the standpoint of overall performance in terms of cornering performance during the initial stage of running and during the middle and later stages of running, the base tread rubber composition preferably contains, as a filler, the above-described carbon black or silica, more preferably the carbon black.

The filler content per 100 parts by mass of the rubber components in the base tread rubber composition is preferably 10 parts by mass or more, more preferably 25 parts by mass or more, still more preferably 30 parts by mass or more, further preferably 40 parts by mass or more, particularly preferably 50 parts by mass or more. The upper limit is preferably 100 parts by mass or less, more preferably 80 parts by mass or less, still more preferably 60 parts by mass or less. When the filler content is within the range indicated above, the advantageous effect tends to be better achieved.

The carbon black content per 100 parts by mass of the rubber components in the base tread rubber composition is preferably 10 parts by mass or more, more preferably 15 parts by mass or more, still more preferably 25 parts by mass or more, particularly preferably 30 parts by mass or more. The lower limit of the carbon black content may be 40 parts by mass or more or 50 parts by mass or more. The upper limit is preferably 100 parts by mass or less, more preferably 80 parts by mass or less, still more preferably 60 parts by mass or less. When the carbon black content is within the range indicated above, the advantageous effect tends to be better achieved.

The nitrogen adsorption specific surface area ($N_2SA$) of the carbon black is preferably 30 $m^2/g$ or more, more preferably 50 $m^2/g$ or more, still more preferably 65 $m^2/g$ or more, particularly preferably 75 $m^2/g$ or more. The $N_2SA$ is preferably 120 $m^2/g$ or less, more preferably 100 $m^2/g$ or less, still more preferably 90 $m^2/g$ or less. When the $N_2SA$ is within the range indicated above, the advantageous effect tends to be better achieved.

The silica content per 100 parts by mass of the rubber components in the base tread rubber composition is preferably 10 parts by mass or more, more preferably 15 parts by mass or more, still more preferably 20 parts by mass or more, particularly preferably 25 parts by mass or more. The silica content is preferably 60 parts by mass or less, more preferably 50 parts by mass or less, still more preferably 40 parts by mass or less. When the silica content is within the range indicated above, the advantageous effect tends to be better achieved.

The nitrogen adsorption specific surface area ($N_2SA$) of the silica is preferably 120 $m^2/g$ or more, more preferably 150 $m^2/g$ or more, still more preferably 160 $m^2/g$ or more. The $N_2SA$ is preferably less than 200 $m^2/g$, more preferably 195 $m^2/g$ or less, still more preferably 185 $m^2/g$ or less.

The silane coupling agent content per 100 parts by mass of the silica in the base tread rubber composition is preferably 1 to 15 parts by mass, more preferably 3 to 10 parts by mass.

From the standpoint of overall performance in terms of cornering performance during the initial stage of running and during the middle and later stages of running, the base tread rubber composition preferably contains any of the above-described liquid plasticizers which have plasticity and are liquid at 25°C, more preferably any of the above-described oils.

The oil used in the base tread rubber composition is preferably a paraffinic process oil or an aromatic process oil.

The liquid plasticizer content per 100 parts by mass of the rubber components in the base tread rubber composition is preferably 3 parts by mass or more, more preferably 5 parts by mass or more, still more preferably 8 parts by mass or more, particularly preferably 10 parts by mass or more. The upper limit is preferably 40 parts by mass or less, more preferably 30 parts by mass or less, still more preferably 20 parts by mass or less. When the liquid plasticizer content is within the range indicated above, the advantageous effect tends to be better achieved. Here, the oil content is also desirably within the range as indicated above.

The base tread rubber composition preferably contains sulfur.

The sulfur content per 100 parts by mass of the rubber components in the base tread rubber composition is preferably 0.5 parts by mass or more, more preferably 1.0 parts by mass or more, still more preferably 1.5 parts by mass or more, particularly preferably 2.0 parts by mass or more. The sulfur content is also preferably 7.0 parts by mass or less, more preferably 5.0 parts by mass or less, still more preferably 3.5 parts by mass or less. When the sulfur content is within the range indicated above, the advantageous effect tends to be better achieved.

The base tread rubber composition preferably contains a vulcanization accelerator.

The vulcanization accelerator content per 100 parts by mass of the rubber components in the base tread rubber composition is preferably 0.5 parts by mass or more, more preferably 1.0 parts by mass or more, still more preferably 1.5 parts by mass or more, particularly preferably 2.0 parts by mass or more. The vulcanization accelerator content is also preferably 7.0 parts by mass or less, more preferably 5.0 parts by mass or less, still more preferably 3.5 parts by mass or less. When the vulcanization accelerator content is within the range indicated above, the advantageous effect tends to be better achieved.

The cap tread or base tread rubber composition can be prepared by general methods. Specifically, it may be prepared, for example, by kneading the components in a Banbury mixer, a kneader, an open roll mill, or other device, followed by vulcanization.

The kneading conditions are as follows. In kneading additives other than vulcanizing agents and vulcanization accelerators (base kneading), the kneading temperature is usually 50 to 200°C, preferably 80 to 190°C, and the kneading time is usually 30 seconds to 30 minutes, preferably 1 to 30 minutes. In kneading vulcanizing agents and vulcanization accelerators (final kneading), the kneading temperature is usually 100°C or lower, preferably from room temperature to 80°C. The resulting kneaded mixture (unvulcanized rubber composition) is usually vulcanized by press vulcanization, for example. The vulcanization temperature is usually 120 to 200°C, preferably 140 to 180°C.

The present tire can be produced from the above-described rubber compositions by usual methods.

Specifically, the unvulcanized rubber compositions containing the components may be extruded into the shapes of cap and base treads, respectively, and assembled with other tire components in a usual manner on a tire building machine to build an unvulcanized tire, which may then be heated and pressurized in a vulcanizer to obtain a tire.

The tire may be, for example, a pneumatic tire or an airless (solid) tire, preferably a pneumatic tire. The tire is particularly suitable for use as a winter tire (e.g., studless winter tire, snow tire, cold weather tire, studded tire). The tire may be used as a tire for passenger vehicles, large passenger vehicles, large SUVs, heavy duty vehicles such as trucks and buses, light trucks, or motorcycles, or as a racing tire (high performance tire), for example.

EXAMPLES

The present invention will be specifically described with reference to, but not limited to, examples.

The chemicals used in the examples and comparative examples are listed below.

NR: TSR20

SBR 1: HP755B (Asahi Kasei Corporation, S-SBR, styrene content: 40% by mass, vinyl content: 46% by mass, oil extended rubber containing 50 parts by mass of oil per 100 parts by mass of rubber solids)

SBR 2: TUFDENE 4850 (Asahi Kasei Corporation, S-SBR, styrene content: 40% by mass, oil extended rubber containing 50 parts by mass of oil per 100 parts by mass of rubber solids)

BR: Ubepol BR150B (Ube Industries, Ltd., cis content: 97% by mass or higher)

Carbon black: SHOBLACK N330 (Cabot Japan K.K., $N_2SA$: 75 m$^2$/g, DBP oil absorption: 102 ml/100 g)

Silica: ZEOSIL 1165MP (Rhodia, $N_2SA$: 160 m$_2$/g)

Silane coupling agent: Si69 (Evonik, bis[3-(triethoxysilyl)propyl]polysulfide)

Solid resin: Petrotack 100V (C5/C9 resin, softening point: 94°C) available from Tosoh Corporation

Oil: VIVATEC 500 (H&R, TDAE oil)

Zinc oxide: Zinc oxide #2 available from Mitsui Mining & Smelting Co., Ltd.

Stearic acid: Stearic acid "TSUBAKI" (NOF Corporation)

Antioxidant: Antigene 6C (Sumitomo Chemical Co., Ltd., N-(1,3-dimethylbutyl)-N'-phenyl-p-phenylenediamine)

Wax: SUNNOC N (Ouchi Shinko Chemical Industrial Co., Ltd.)

Sulfur: Powdered sulfur available from Karuizawa Sulfur Co., Ltd.

Vulcanization accelerator 1: SANCELER CM-G (Sanshin Chemical Industry Co., Ltd., N-cyclohexyl-2-benzothiazole sulfenamide)

Vulcanization accelerator 2: NOCCELER ZTC (Ouchi Shinko Chemical Industrial Co., Ltd., zinc dibenzyldithiocarbamate)
Vulcanization accelerator 3: NOCCELER D (N,N'-diphenylguanidine) available from Ouchi Shinko Chemical Industrial Co., Ltd.

<Preparation of cap tread rubber composition>

According to the formulation shown in Table 1 or 5, the materials other than the sulfur and vulcanization accelerators were kneaded for five minutes at 150°C using a 1.7 L Banbury mixer (Kobe Steel, Ltd.) to give a kneaded mixture. Next, the sulfur and vulcanization accelerators were added to the kneaded mixture, and they were kneaded for five minutes at 80°C using an open roll mill to obtain an unvulcanized rubber composition.

<Preparation of base tread rubber composition>

According to the formulation shown in Table 2 or 6, the materials other than the sulfur and vulcanization accelerator were kneaded for five minutes at 150°C using a 1.7 L Banbury mixer (Kobe Steel, Ltd.) to give a kneaded mixture. Next, the sulfur and vulcanization accelerator were added to the kneaded mixture, and they were kneaded for five minutes at 80°C using an open roll mill to obtain an unvulcanized rubber composition.

<Preparation of test tire>

According to the specification shown in Table 3 or 4 or Table 7 or 8, the unvulcanized cap tread and base tread rubber compositions were formed into the shapes of cap and base treads, respectively, and assembled with other tire components on a tire building machine to build an unvulcanized tire. The unvulcanized tire was vulcanized at 170°C for 10 minutes to prepare a test tire (size: 205/70R15, tire for passenger vehicles).

[Evaluation]

The test tires prepared as above were evaluated as described below, and the results are shown in Tables 3 and 4 and Tables 7 and 8. It should be noted that Comparative Examples 1-1 and 2-1 are used as standards of comparison in Tables 3 and 4 and Tables 7 and 8, respectively.

(Viscoelastic testing)

Viscoelastic measurement samples having a size of 20 mm in length $\times$ 4 mm in width $\times$ 1 mm in thickness were collected from the cap and base treads of the tread portion of each test tire in such a manner that the longer side of each sample was in the tire circumferential direction. Then, tan $\delta$ (loss tangent)-temperature curves of the samples were measured using EPLEXOR series available from GABO over a temperature range of 30 to 100°C at a frequency of 10 Hz, an initial strain of 10%, an amplitude of $\pm0.5\%$, and a rate of temperature rise of 2°C/min. The averages of the tan $\delta$ values over a temperature range of 30 to 100°C were determined from the tan $\delta$-temperature curves of the cap and base treads, respectively.

(Cornering performance during initial stage of running)

The test tires were mounted on a front-engine, rear-wheel-drive car of 2000 cc displacement made in Japan. The car was driven 10 laps on a dry asphalt road. Here, ten test drivers evaluated the stability during cornering on the second lap on a scale of one to five. A larger score indicates better performance. The sum of the scores given by the ten drivers was calculated and expressed as an index (index of cornering performance during initial stage of running) relative to that of the standard comparative example taken as 100. A higher index indicates better cornering performance during the initial stage of running.

(Cornering performance during middle and later stages of running)

The test tires were mounted on a front-engine, rear-wheel-drive car of 2000 cc displacement made in Japan. The car was driven 10 laps on a dry asphalt road. Here, ten test drivers evaluated the stability during cornering on the ninth lap on a scale of one to five. A larger score indicates better performance. The sum of the scores given by the ten drivers was calculated and expressed as an index (index of cornering performance during middle and later stages of running) relative to that of the standard comparative example taken as 100. A higher index indicates better cornering performance during the middle and later stages of running.

[Table 1]

Cap tread rubber composition (containing carbon black)

| | | Formulation of cap tread | | | |
|---|---|---|---|---|---|
| | | C1-1 | C1-2 | C1-3 | C1-4 |
| Formulation (parts by mass) | SBR 1 | 137.5 | 137.5 | 137.5 | 137.5 |
| | Carbon black | 80 | 110 | 120 | 130 |
| | Solid resin | 20 | 40 | 40 | 40 |
| | Oil | 20 | 20 | 20 | 20 |
| | Zinc oxide | 2 | 2 | 2 | 2 |
| | Stearic acid | 2 | 2 | 2 | 2 |
| | Antioxidant | 2 | 2 | 2 | 2 |
| | Wax | 2 | 2 | 2 | 2 |
| | Sulfur | 1.5 | 1.5 | 1.5 | 1.5 |
| | Vulcanization accelerator 1 | 2 | 2 | 2 | 2 |
| | Vulcanization accelerator 2 | 1 | 1 | 1 | 1 |
| Average loss tangent (tan δ) over 30-100°C | | 0.08 | 0.16 | 0.20 | 0.24 |

[Table 2]

Base tread rubber composition (containing carbon black)

| | | Formulation of base tread | | | |
|---|---|---|---|---|---|
| | | B1-1 | B1-2 | B1-3 | B1-4 |
| Formulation (parts by mass) | NR | 30 | 75 | 75 | 75 |
| | SBR 2 | 75 | | | |
| | BR | 20 | 25 | 25 | 25 |
| | Carbon black | 50 | 30 | 25 | 25 |
| | Oil | 10 | 10 | 10 | 10 |
| | Zinc oxide | 2 | 2 | 2 | 2 |
| | Stearic acid | 2 | 2 | 2 | 2 |
| | Antioxidant | 2 | 2 | 2 | 2 |
| | Wax | 2 | 2 | 2 | 2 |
| | Sulfur | 2 | 2 | 2 | 3 |
| | Vulcanization accelerator 1 | 2 | 2 | 2 | 2 |
| Average loss tangent (tan δ) over 30-100°C | | 0.10 | 0.04 | 0.03 | 0.02 |

[Table 3]

| Specification of tire (containing carbon black) | | |
|---|---|---|
| | Comparative Example | |
| | 1-1 | 1-2 |
| Formulation of cap tread | C1-1 | C1-1 |
| Formulation of base tread | B1-1 | B1-1 |
| Land ratio (LR) | 60 | 80 |
| Average loss tangent over 30-100°C of cap tread (tan δ c) | 0.08 | 0.08 |
| Average loss tangent over 30-100°C of base tread (tan δ b) | 0.10 | 0.10 |

(continued)

| Specification of tire (containing carbon black) | | |
|---|---|---|
| | Comparative Example | |
| | 1-1 | 1-2 |
| tan δ c/tan δ b | 0.8 | 0.8 |
| tan δ c/LR × 100 | 0.13 | 0.10 |
| Average thickness of cap tread Tc (mm) | 6.4 | 6.4 |
| Average thickness of base tread Tb (mm) | 1.6 | 1.6 |
| Tc/Tb | 4.0 | 4.0 |
| (a) Cornering performance during initial stage of running | 100 | 91 |
| (b) Cornering performance during middle and later stages of running | 100 | 108 |
| Overall performance (= (a) + (b)) | 200 | 199 |

[Table 4]

| Specification of tire (containing carbon black) | | | | | | |
|---|---|---|---|---|---|---|
| | Example | | | | | |
| | 1-1 | 1-2 | 1-3 | 1-4 | 1-5 | 1-6 |
| Formulation of cap tread | C1-2 | C1-2 | C1-3 | C1-4 | C1-2 | C1-2 |
| Formulation of base tread | B1-2 | B1-2 | B1-2 | B1-2 | B1-3 | B1-4 |
| Land ratio (LR) | 80 | 85 | 80 | 80 | 80 | 80 |
| Average loss tangent over 30-100°C of cap tread (tan δ c) | 0.16 | 0.16 | 0.20 | 0.24 | 0.16 | 0.16 |
| Average loss tangent over 30-100°C of base tread (tan δ b) | 0.04 | 0.04 | 0.04 | 0.04 | 0.03 | 0.02 |
| tan δ c/tan δ b | 4.0 | 4.0 | 5.0 | 6.0 | 5.3 | 8.0 |
| tan δ c/LR×100 | 0.20 | 0.19 | 0.25 | 0.30 | 0.20 | 0.20 |
| Average thickness of cap tread Tc (mm) | 6.4 | 6.4 | 6.4 | 6.4 | 6.4 | 6.4 |
| Average thickness of base tread Tb (mm) | 1.6 | 1.6 | 1.6 | 1.6 | 1.6 | 1.6 |
| Tc/Tb | 4.0 | 4.0 | 4.0 | 4.0 | 4.0 | 4.0 |
| (a) Cornering performance during initial stage of running | 109 | 106 | 118 | 127 | 130 | 133 |
| (b) Cornering performance during middle and later stages of running | 114 | 122 | 124 | 119 | 122 | 122 |
| Overall performance (= (a) + (b)) | 223 | 228 | 242 | 246 | 252 | 255 |

[Table 5]

Cap tread rubber composition (containing silica)

| | | Formulation of cap tread | | | |
|---|---|---|---|---|---|
| | | C2-1 | C2-2 | C2-3 | C2-4 |
| Formulation (parts by mass) | SBR 2 | 150 | 150 | 150 | 150 |
| | Carbon black | 30 | 30 | 30 | 30 |
| | Silica | 50 | 90 | 90 | 100 |
| | Silane coupling agent | 4 | 7.2 | 7.2 | 8 |
| | Solid resin | 20 | 38 | 45 | 40 |
| | Oil | 20 | 20 | 20 | 20 |
| | Zinc oxide | 2 | 2 | 2 | 2 |
| | Stearic acid | 2 | 2 | 2 | 2 |
| | Antioxidant | 2 | 2 | 2 | 2 |
| | Wax | 2 | 2 | 2 | 2 |
| | Sulfur | 1.5 | 1.5 | 1.5 | 1.5 |
| | Vulcanization accelerator 1 | 2 | 2 | 2 | 2 |
| | Vulcanization accelerator 2 | 1 | 1 | 1 | 1 |
| | Vulcanization accelerator 3 | 1 | 1 | 1 | 1 |
| Average loss tangent (tan δ) over 30-100°C | | 0.06 | 0.16 | 0.19 | 0.21 |

[Table 6]

Base tread rubber composition (containing silica)

| | | Formulation of base tread | | | |
|---|---|---|---|---|---|
| | | B2-1 | B2-2 | B2-3 | B2-4 |
| Formulation (parts by mass) | NR | 30 | 65 | 65 | 65 |
| | SBR 2 | 75 | | | |
| | BR | 20 | 35 | 35 | 35 |
| | Carbon black | 25 | 25 | 15 | 15 |
| | Silica | 25 | 25 | 15 | 15 |
| | Silane coupling agent | 2 | 2 | 1.2 | 1.2 |
| | Oil | 10 | 10 | 10 | 10 |
| | Zinc oxide | 2 | 2 | 2 | 2 |
| | Stearic acid | 2 | 2 | 2 | 2 |
| | Antioxidant | 2 | 2 | 2 | 2 |
| | Wax | 2 | 2 | 2 | 2 |
| | Sulfur | 2 | 2 | 2 | 3 |
| | Vulcanization accelerator 1 | 2 | 2 | 2 | 2 |
| Average loss tangent (tan δ) over 30-100°C | | 0.06 | 0.04 | 0.03 | 0.02 |

[Table 7]

| Specification of tire (containing silica) | | |
|---|---|---|
| | Comparative Example | |
| | 2-1 | 2-2 |
| Formulation of cap tread | C2-1 | C2-1 |
| Formulation of base tread | B2-1 | B2-1 |

(continued)

| Specification of tire (containing silica) | Comparative Example | |
|---|---|---|
| | 2-1 | 2-2 |
| Land ratio (LR) | 60 | 80 |
| Average loss tangent over 30-100°C of cap tread (tan $\delta$ c) | 0.06 | 0.06 |
| Average loss tangent over 30-100°C of base tread (tan $\delta$ b) | 0.09 | 0.09 |
| tan $\delta$ c/tan $\delta$ b | 0.7 | 0.7 |
| tan $\delta$ c/LR $\times$ 100 | 0.10 | 0.08 |
| Average thickness of cap tread Tc (mm) | 6.4 | 6.4 |
| Average thickness of base tread Tb (mm) | 1.6 | 1.6 |
| Tc/Tb | 4.0 | 4.0 |
| (a) Cornering performance during initial stage of running | 100 | 89 |
| (b) Cornering performance during middle and later stages of running | 100 | 105 |
| Overall performance (= (a) + (b)) | 200 | 194 |

[Table 8]

| Specification of tire (containing silica) | Example | | | | | |
|---|---|---|---|---|---|---|
| | 2-1 | 2-2 | 2-3 | 2-4 | 2-5 | 2-6 |
| Formulation of cap tread | C2-2 | C2-2 | C2-3 | C2-4 | C2-2 | C2-2 |
| Formulation of base tread | B2-2 | B2-2 | B2-2 | B2-2 | B2-3 | B2-4 |
| Land ratio (LR) | 80 | 85 | 80 | 80 | 80 | 80 |
| Average loss tangent over 30-100°C of cap tread (tan $\delta$ c) | 0.16 | 0.16 | 0.19 | 0.21 | 0.16 | 0.16 |
| Average loss tangent over 30-100°C of base tread (tan $\delta$ b) | 0.04 | 0.04 | 0.04 | 0.04 | 0.03 | 0.02 |
| tan $\delta$ c/tan $\delta$ b | 4.0 | 4.0 | 4.8 | 5.3 | 5.3 | 8.0 |
| tan $\delta$ c/LR $\times$ 100 | 0.20 | 0.19 | 0.24 | 0.26 | 0.20 | 0.20 |
| Average thickness of cap tread Tc (mm) | 6.4 | 6.4 | 6.4 | 6.4 | 6.4 | 6.4 |
| Average thickness of base tread Tb (mm) | 1.6 | 1.6 | 1.6 | 1.6 | 1.6 | 1.6 |
| Tc/Tb | 4.0 | 4.0 | 4.0 | 4.0 | 4.0 | 4.0 |
| (a) Cornering performance during initial stage of running | 105 | 103 | 111 | 116 | 119 | 124 |
| (b) Cornering performance during middle and later stages of running | 108 | 119 | 119 | 119 | 116 | 116 |
| Overall performance (= (a) + (b)) | 213 | 222 | 230 | 235 | 235 | 240 |

As shown in the tables, the tires of the examples in which the tread had a land ratio of 70% or higher, the cap tread had an average loss tangent over 30-100°C of 0.10 or more, and the base tread had an average loss tangent over 30-100°C of less than 0.05 were excellent in overall performance in terms of cornering performance during the initial stage of running and during the middle and later stages of running (expressed by the sum of the two indices of cornering performance during initial stage of running and cornering performance during middle and later stages of running).

REFERENCE SIGNS LIST

11 cap tread
11c cap tread face
Pc point on cap tread face 11c
Tc thickness of cap tread 11 at point Pc
12 base tread
12b base tread face
Pb point on base tread face 12b
Tb thickness of base tread 12 at point Pb
21 innerliner
22 carcass
23 belt
23A interior layer
23B exterior layer
24 band

**Claims**

1. A tire, comprising a tread comprising a cap tread (11) and a base tread (12),

   the tread having a land ratio of 70% or higher,
   the cap tread (11) having an average loss tangent over 30-100°C of 0.10 or more,
   the base tread (12) having an average loss tangent over 30-100°C of less than 0.05,
   wherein tan $\delta$ (loss tangent)-temperature curves of samples of cap tread (11) and base tread (12) were measured over a temperature range of 30 to 100°C at a frequency of 10 Hz, an initial strain of 10%, an amplitude of $\pm$0.5%, and a rate of temperature rise of 2°C/min.

2. The tire according to claim 1,
   wherein the cap tread (11) has an average loss tangent over 30-100°C of 0.12 or more.

3. The tire according to claim 1,
   wherein the cap tread (11) has an average loss tangent over 30-100°C of 0.15 or more.

4. The tire according to any one of claims 1 to 3,
   wherein the base tread (12) has an average loss tangent over 30-100°C of less than 0.04.

5. The tire according to any one of claims 1 to 3,
   wherein the base tread (12) has an average loss tangent over 30-100°C of less than 0.03.

6. The tire according to any one of claims 1 to 5,
   wherein the tire satisfies the following relationship:

$$\tan \delta c / \tan \delta b \geq 1.1$$

   wherein tan $\delta$ c represents the average loss tangent over 30-100°C of the cap tread (11), and tan $\delta$ b represents the average loss tangent over 30-100°C of the base tread (12).

7. The tire according to any one of claims 1 to 5,
   wherein the tire satisfies the following relationship:

$$\tan \delta c / \tan \delta b \geq 1.3$$

wherein tan $\delta$ c represents the average loss tangent over 30-100°C of the cap tread (11), and tan $\delta$ b represents the average loss tangent over 30-100°C of the base tread (12).

8. The tire according to any one of claims 1 to 7,
   wherein the tire satisfies the following relationship:

$$\tan\ \delta\ c/LR\ \times\ 100\ \geq\ 0.12$$

   wherein tan $\delta$ c represents the average loss tangent over 30-100°C of the cap tread (11), and LR represents the land ratio (%).

9. The tire according to any one of claims 1 to 7,
   wherein the tire satisfies the following relationship:

$$\tan\ \delta\ c/LR\ \times\ 100\ \geq\ 0.15$$

   wherein tan $\delta$ c represents the average loss tangent over 30-100°C of the cap tread (11), and LR represents the land ratio (%).

10. The tire according to any one of claims 1 to 9,
    wherein the tire satisfies the following relationship:

$$Tc\ >\ Tb$$

    wherein Tc represents an average thickness of the cap tread (11), and Tb represents an average thickness of the base tread (12).

11. The tire according to any one of claims 1 to 10,
    wherein the tire satisfies the following relationship:

$$Tc/Tb\ \leq\ 4.0$$

    wherein Tc represents an average thickness of the cap tread (11), and Tb represents an average thickness of the base tread (12).

12. The tire according to any one of claims 1 to 11,
    wherein a cap tread rubber composition forming the cap tread (11)comprises a styrene-butadiene rubber, a filler, a solid plasticizer, and a liquid plasticizer.

13. The tire according to claim 12,

    wherein the cap tread rubber composition forming the cap tread (11) has a styrene-butadiene rubber content of 50% by mass or more based on 100% by mass of rubber components in the cap tread rubber composition, and the cap tread rubber composition has a filler content of 50 parts by mass or more, a solid plasticizer content of 10 parts by mass or more, and a liquid plasticizer content of 5 parts by mass or more, each per 100 parts by mass of the rubber components.

14. The tire according to any one of claims 1 to 13,
    wherein a base tread rubber composition forming the base tread (12) comprises an isoprene-based rubber, a polybutadiene rubber, a filler, and a liquid plasticizer.

15. The tire according to claim 14,

    wherein the base tread rubber composition forming the base tread (12) has an isoprene-based rubber content of 20 to 80% by mass and a polybutadiene rubber content of 5 to 50% by mass, each based on 100% by mass of rubber components in the base tread rubber composition, and
the base tread rubber composition has a filler content of 10 parts by mass or more and a liquid plasticizer content of 3 parts by mass or more, each per 100 parts by mass of the rubber components.

**Patentansprüche**

1. Reifen, umfassend einen Laufstreifen, der einen Decklaufstreifen (11) und einen Basislaufstreifen (12) umfasst,

   wobei der Laufstreifen einen Positivprofilanteil von 70 % oder höher aufweist,
   wobei der Decklaufstreifen (11) einen mittleren Verlusttangens über 30-100°C von 0,10 oder mehr aufweist,
   wobei der Basislaufstreifen (12) einen mittleren Verlusttangens über 30-100°C von weniger als 0,05 aufweist,
   wobei tan δ (Verlusttangens)-Temperaturkurven von Proben des Decklaufstreifens (11) und des Basislaufstreifens (12) über einen Temperaturbereich von 30 bis 100°C bei einer Frequenz von 10 Hz, einer Anfangsdehnung von 10 %, einer Amplitude von ±0,5 % und einer Temperaturanstiegsrate von 2 °C/min gemessen wurden.

2. Reifen nach Anspruch 1,
   wobei der Decklaufstreifen (11) einen mittleren Verlusttangens über 30-100°C von 0,12 oder mehr aufweist.

3. Reifen nach Anspruch 1,
   wobei der Decklaufstreifen (11) einen mittleren Verlusttangens über 30-100°C von 0,15 oder mehr aufweist.

4. Reifen nach einem der Ansprüche 1 bis 3,
   wobei der Basislaufstreifen (12) einen mittleren Verlusttangens über 30-100°C von weniger als 0,04 aufweist.

5. Reifen nach einem der Ansprüche 1 bis 3,
   wobei der Basislaufstreifen (12) einen mittleren Verlusttangens über 30-100°C von weniger als 0,03 aufweist.

6. Reifen nach einem der Ansprüche 1 bis 5,
   wobei der Reifen dem folgenden Verhältnis genügt:

$$\tan \delta\, c / \tan \delta\, b \geq 1{,}1$$

   wobei tan δ c den mittleren Verlusttangens über 30-100°C des Decklaufstreifens (11) darstellt, und tan δ b den mittleren Verlusttangens über 30-100°C des Basislaufstreifens (12) darstellt.

7. Reifen nach einem der Ansprüche 1 bis 5,
   wobei der Reifen dem folgenden Verhältnis genügt:

$$\tan \delta\, c / \tan \delta\, b \geq 1{,}3$$

   wobei tan δ c den mittleren Verlusttangens über 30-100°C des Decklaufstreifens (11) darstellt, und tan δ b den mittleren Verlusttangens über 30-100°C des Basislaufstreifens (12) darstellt.

8. Reifen nach einem der Ansprüche 1 bis 7,
   wobei der Reifen dem folgenden Verhältnis genügt:

$$\tan \delta\, c / LR \times 100 \geq 0{,}12$$

   wobei tan δ c den mittleren Verlusttangens über 30-100°C des Decklaufstreifens (11) darstellt, und LR den Positivprofilanteil (%) darstellt.

9. Reifen nach einem der Ansprüche 1 bis 7,
   wobei der Reifen dem folgenden Verhältnis genügt:

$$\tan \delta\, c/LR \times 100 \geqq 0{,}15$$

wobei tan $\delta$ c den mittleren Verlusttangens über 30-100°C des Decklaufstreifens (11) darstellt, und LR den Positivprofilanteil (%) darstellt.

10. Reifen nach einem der Ansprüche 1 bis 9,
wobei der Reifen dem folgenden Verhältnis genügt:

$$Tc > Tb$$

wobei Tc eine mittlere Dicke des Decklaufstreifens (11) darstellt, und Tb eine mittlere Dicke des Basislaufstreifens (12) darstellt.

11. Reifen nach einem der Ansprüche 1 bis 10,
wobei der Reifen dem folgenden Verhältnis genügt:

$$Tc/Tb \leq 4{,}0$$

wobei Tc eine mittlere Dicke des Decklaufstreifens (11) darstellt, und Tb eine mittlere Dicke des Basislaufstreifens (12) darstellt.

12. Reifen nach einem der Ansprüche 1 bis 11,
wobei eine Decklaufstreifen-Kautschukzusammensetzung, welche den Decklaufstreifen (11) bildet, einen Styrol-Butadien-Kautschuk, einen Füllstoff, einen festen Weichmacher und einen flüssigen Weichmacher umfasst.

13. Reifen nach Anspruch 12,

wobei die Decklaufstreifen-Kautschukzusammensetzung, welche den Decklaufstreifen (11) bildet, einen Styrol-Butadien-Kautschuk-Gehalt von 50 Massenprozent oder mehr aufweist, bezogen auf 100 Massenprozent an Kautschukkomponenten in der Decklaufstreifen-Kautschukzusammensetzung, und
die Decklaufstreifen-Kautschukzusammensetzung einen Füllstoffgehalt von 50 Massenteilen oder mehr, einen Gehalt an festem Weichmacher von 10 Massenteilen oder mehr und einen Gehalt an flüssigem Weichmacher von 5 Massenteilen oder mehr aufweist, jeweils pro 100 Massenteile der Kautschukkomponenten.

14. Reifen nach einem der Ansprüche 1 bis 13,
wobei eine Basislaufstreifen-Kautschukzusammensetzung, welche den Basislaufstreifen (12) bildet, einen Isopren-basierten Kautschuk, einen Polybutadien-Kautschuk, einen Füllstoff und einen flüssigen Weichmacher umfasst.

15. Reifen nach Anspruch 14,

wobei die Basislaufstreifen-Kautschukzusammensetzung, welche den Basislaufstreifen (12) bildet, einen Gehalt an Isopren-basiertem Kautschuk von 20-80 Massenprozent und einen Polybutadien-Kautschuk-Gehalt von 5-50 Massenprozent aufweist, jeweils bezogen auf 100 Massenprozent an Kautschukkomponenten in der Basislaufstreifen-Kautschukzusammensetzung, und
die Basislaufstreifen- Kautschukzusammensetzung einen Füllstoffgehalt von 10 Massenteilen oder mehr und einen Gehalt an flüssigem Weichmacher von 3 Massenteilen oder mehr aufweist, jeweils pro 100 Massenteile der Kautschukkomponenten.

**Revendications**

1. Pneumatique comprenant une bande de roulement constituée d'une bande de roulement de chape (11) et d'une bande de roulement de base (12),

la bande de roulement ayant un rapport de relief de 70 % ou plus élevé,

la bande de roulement de chape (11) ayant une tangente de perte moyenne sur 30 à 100 °C de 0,10 ou plus, la bande de roulement de base (12) ayant une tangente de perte moyenne sur 30 à 100 °C de moins de 0,05, dans lequel des courbes tan δ (tangente de perte)-température d'échantillons de bande de roulement de chape (11) et de bande de roulement de base (12) ont été mesurées sur une plage de températures de 30 à 100 °C à une fréquence de 10 Hz, une contrainte initiale de 10 %, une amplitude de ± 0,5 %, et une vitesse de montée en température de 2 °C/min.

2. Pneumatique selon la revendication 1,
dans lequel la bande de roulement de chape (11) a une tangente de perte moyenne sur 30 à 100 °C de 0,12 ou plus.

3. Pneumatique selon la revendication 1,
dans lequel la bande de roulement de chape (11) a une tangente de perte moyenne sur 30 à 100 °C de 0,15 ou plus.

4. Pneumatique selon l'une quelconque des revendications 1 à 3,
dans lequel la bande de roulement de base (12) a une tangente de perte moyenne sur 30 à 100 °C de moins de 0,04.

5. Pneumatique selon l'une quelconque des revendications 1 à 3,
dans lequel la bande de roulement de base (12) a une tangente de perte moyenne sur 30 à 100 °C de moins de 0,03.

6. Pneumatique selon l'une quelconque des revendications 1 à 5,
dans lequel le pneumatique satisfait à la relation suivante :

$$\tan \delta\, c\, /\, \tan \delta\, b \geq 1,1$$

où tan δ c représente la tangente de perte moyenne sur 30 à 100 °C de la bande de roulement de chape (11), et tan δ b représente la tangente de perte moyenne sur 30 à 100 °C de la bande de roulement de base (12).

7. Pneumatique selon l'une quelconque des revendications 1 à 5,
dans lequel le pneumatique satisfait à la relation suivante :

$$\tan \delta\, c\, /\, \tan \delta\, b \geq 1,3$$

où tan δ c représente la tangente de perte moyenne sur 30 à 100 °C de la bande de roulement de chape (11), et tan δ b représente la tangente de perte moyenne sur 30 à 100 °C de la bande de roulement de base (12).

8. Pneumatique selon l'une quelconque des revendications 1 à 7,
dans lequel le pneumatique satisfait à la relation suivante :

$$\tan \delta\, c\, /\, LR \times 100 \geq 0,12$$

où tan δ c représente la tangente de perte moyenne sur 30 à 100 °C de la bande de roulement de chape (11), et LR représente le rapport de relief (%).

9. Pneumatique selon l'une quelconque des revendications 1 à 7,
dans lequel le pneumatique satisfait à la relation suivante :

$$\tan \delta\, c\, /\, LR \times 100 \geq 0,15$$

où tan δ c représente la tangente de perte moyenne sur 30 à 100 °C de la bande de roulement de chape (11), et LR représente le rapport de relief (%).

10. Pneumatique selon l'une quelconque des revendications 1 à 9,
dans lequel le pneumatique satisfait à la relation suivante :

$$Tc > Tb$$

où Tc représente une épaisseur moyenne de la bande de roulement de chape (11), et Tb représente une épaisseur moyenne de la bande de roulement de base (12).

11. Pneumatique selon l'une quelconque des revendications 1 à 10,
dans lequel le pneumatique satisfait à la relation suivante :

$$Tc / Tb \leq 4,0$$

où Tc représentent une épaisseur moyenne de la bande de roulement de chape (11), et Tb représente une épaisseur moyenne de la bande de roulement de base (12).

12. Pneumatique selon l'une quelconque des revendications 1 à 11,
dans lequel une composition de caoutchouc de bande de roulement de chape formant la bande de roulement de chape (11) comprend un caoutchouc styrène butadiène, un agent de charge, un plastifiant solide, et un plastifiant liquide.

13. Pneumatique selon la revendication 12,

dans lequel la composition de caoutchouc de bande de roulement de chape formant la bande de roulement de chape (11) a une teneur en caoutchouc styrène butadiène de 50 % en masse ou plus sur la base de 100 % en masse de composants de caoutchouc dans la composition de caoutchouc de bande de roulement de chape, et la composition de caoutchouc de bande de roulement de chape a une teneur en agent de charge de 50 parts en masse ou plus, une teneur en plastifiant solide de 10 parts en masse ou plus, et une teneur en plastifiant liquide de 5 parts en masse ou plus, chacun pour 100 parts en masse des composants de caoutchouc.

14. Pneumatique selon l'une quelconque des revendications 1 à 13,
dans lequel une composition de caoutchouc de bande de roulement de base formant la bande de roulement de base (12) comprend un caoutchouc à base d'isoprène, un caoutchouc polybutadiène, un agent de charge, et un plastifiant liquide.

15. Pneumatique selon la revendication 14,

dans lequel la composition de caoutchouc de bande de roulement de base formant la bande de roulement de base (12) a une teneur en caoutchouc à base d'isoprène de 20 à 80 % en masse et une teneur en caoutchouc polybutadiène de 5 à 50 % en masse, chacun sur la base de 100 % en masse de composants de caoutchouc dans la composition de caoutchouc de bande de roulement de base, et la composition de caoutchouc de bande de roulement de base a une teneur en agent de charge de 10 parts en masse ou plus et une teneur en plastifiant liquide de 3 parts en masse ou plus, chacun pour 100 parts en masse des composants de caoutchouc.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2676808 B1
- JP 2020121606 A
- WO 2020179582 A1